# EUROPÄISCHE PATENTSCHRIFT

(11) **EP 2 762 509 B1**
(45) Veröffentlichungstag und Bekanntmachung des Hinweises auf die Patenterteilung: **06.03.2019**
(21) Anmeldenummer: 14150264.1
(22) Anmeldetag: 07.01.2014
(51) Int. Cl.: C08G 18/22, C08G 18/24, C08G 18/66

(54) **Zusammensetzung zur Verwendung bei der Herstellung von Polyurethansystemen**
Composition for use in the production of polyurethane systems
Composition destinée à être utilisée dans la fabrication de systèmes polyuréthanes

(30) Priorität: 05.02.2013 DE 102013201825
(43) Veröffentlichungstag der Anmeldung: 06.08.2014
(73) Patentinhaber: Evonik Degussa GmbH, 45128 Essen (DE)
(72) Erfinder: Emmrich-Smolczyk, Eva, 45133 Essen (DE); Modro, Harald, 45966 Gladbeck (DE); Kuhlmann, Patrick, 45359 Essen (DE)

(56) Entgegenhaltungen:
- EP-A1- 0 593 271
- WO-A1-2004/009671
- WO-A1-2012/135888
- WO-A1-2014/066674
- WO-A1-2014/078943
- DE-A1- 19 745 527
- DE-A1- 19 746 379
- DE-A1-102011 050 013
- DE-B- 1 213 112
- JP-A- H09 302 061
- US-A- 3 037 947
- US-A- 3 423 343
- US-A- 3 585 185
- US-A- 3 600 338
- US-A- 4 237 229
- US-A- 4 443 563
- US-A- 4 532 262
- US-A- 5 010 113
- US-A- 5 112 879
- US-A1- 2010 029 799

## Beschreibung

Die Erfindung betrifft eine Zusammensetzung für die Herstellung eines Polyurethansystems, insbesondere eines Polyurethanschaums, die sich dadurch auszeichnet, dass sie ein oder mehrere Verbindungen aufweist, die mindestens einen 5- oder 6-gliedrigen Ring aufweist, der ein oder zwei Sauerstoffatome und Kohlenstoffatome enthält, ein Verfahren zur Herstellung von Polyurethansystemen unter Verwendung dieser Zusammensetzung, entsprechend hergestellte Polyurethansysteme sowie deren Verwendung, wie in den Ansprüchen dargelegt.

Polyurethansysteme sind z. B. Polyurethanbeschichtungen, Polyurethanadhäsive, Polyurethandichtmittel, Polyurethanelastomere oder Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Für einkomponentige feuchtigkeitsreaktive Polyurethanzusammensetzungen geeignete Katalysatoren enthalten meist Zinnverbindungen, wie Zinncarboxylate, insbesondere Zinnoctoat (entspricht Zinn-2-Ethylhexanoat), vielfach kombiniert mit tertiären Aminen.

So wird die Verwendung von Zinnoctoat bei der Herstellung von PUR-Weichschäumen auf der Basis von Polyetherolen beispielsweise in Steve Lee, Huntsman Polyurethanes, The Polyurethanes Book, Verlag Wiley, S. 140, 143-144 beschrieben. Das Zinnoktoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt sowohl das Salz der 2-Ethylhexansäure, als auch die Säure an sich, frei. Die Zersetzung ist zwar erwünscht, weil auf diese Weise die Rückreaktion der Urethanbindung zu den Edukten unterbunden ist, sollte nach Möglichkeit jedoch nicht zur Freisetzung eventuell toxikologisch bedenklicher Substanzen führen. Auch in der Patentliteratur sind zahlreiche Anmeldungen zu finden, die die Verwendung von besagtem Zinnoctoat beschreiben, so z. B. in GB 1432281, GB 1422056, GB 1382538, GB 1012653 oder GB 982280. In diesen Schriften werden als bevorzugte Katalysatorsysteme solche eingesetzt, die Zinnoctoat aufweisen.

Dibutylzinndilaurat (DBTDL) ist ein bei der Herstellung von Polyurethanschäumen, insbesondere von hochelastischen (High Resilience, HR) Polyurethanschäumen, insbesondere nach der Slabstock-Methode einer der effizientesten Katalysatoren, wenn es darum geht die Dichteverteilung über einen großen Schaumblock möglichst homogen zu gestalten. Aus gesundheitlichen und ökotoxikologischen Gründen wird der Einsatz von DBTDL bei der Produktion von Polyurethan-Schaumstoffen immer häufiger vermieden.

Zur Erfüllung der sich in den letzten Jahren deutlich verschärfenden Anforderungen an die Automobil- und Möbelindustrie und deren Schaumstoffzulieferer bezüglich Emissions- und Toxizitätsspezifikationen wurden bereits Katalysatorsysteme entwickelt, die weniger toxische, in den Schaum einpolymerisierbare Liganden enthalten. Solche z. B. auf Rizinolsäure basierenden Systeme werden beispielsweise in EP 1013704 beschrieben.

Oben genannte Systeme stellten bis dato eine der wenigen Alternativen zu den weitverbreiteten Zinnoctoat-Katalysatorsystem (Zinn(II)-Salz der 2-Ethylhexansäure) bzw. Organozinnverbindungen, wie Dibutylzinndilaurat dar. Insbesondere letztgenannte Systeme sind im Hinblick auf die Toxizität der emittierenden Substanzen kritisch zu betrachten. Die, beispielsweise während und nach der Verschäumung freiwerdende 2-Ethylhexansäure gibt wegen möglicher fruchtschädigender (entwicklungsschädigender) Wirkungen beim Menschen (R 63) Anlass zur Besorgnis.

Die als alternative Katalysatoren häufig eingesetzten Zinncarboxylate führen aber häufig zu großen Dichteschwankungen in dem resultierenden Schaumblock, die sich auch auf die Formstabilität auswirken.

Schaumblöcke werden üblicherweise zu Matratzen verarbeitet, in dem der Block in gleichmäßige Scheiben geschnitten wird. Besonders wichtig ist dabei eine homogene Verteilung der Dichte über den gesamten Schaumblock. Mit der Dichte verknüpft ist des Weiteren die Eindrückhärte. Diese beiden Parameter sind maßgeblich für eine gute Qualität einer Matratze ausschlaggebend. Tritt der sogenannte Coldflow-Effekt (Trapezing) auf, kann bei einem Schaumblock nicht nur die Dichteverteilung und die Eindruckhärte unvorteilhaft sein, sondern es fallen beim Aufschneiden der stark deformierten Polyurethanschaumblöcke in die notwendigen Scheiben große Mengen Schnittabfälle an.

Aufgabe der vorliegenden Erfindung war deshalb die Bereitstellung eines Additivs für die Erzeugung von Polyurethansystemen, insbesondere Polyurethanschaumstoffen, welche die vorgenannten Nachteile überwindet. Vorzugsweise weist die Zusammensetzung kein DBTDL auf und ermöglicht bei der Herstellung von HR-Polyurethanschaumstoffen den Erhalt von Schaumstoffblöcken, mit guten Cold-Flow-Eigenschaften und einer möglichst homogenen Dichteverteilung.

Überraschenderweise wurde gefunden, dass die Verwendung von Verbindungen, die mindestens einen 5- oder 6-gliedrigen Ring aufweisen, der aus ein oder zwei Sauerstoffatomen und Kohlenstoffatomen aufgebaut ist, als Additive bzw. in Zusammensetzungen, diese Aufgabe lösen.

Gegenstand der vorliegenden Erfindung ist das Polyurethansystem gemäß Anspruch 1.

Ebenfalls Gegenstand der vorliegenden Erfindung ist die Verwendung einer Zusammensetzung gemäß Anspruch 5 in einem Verfahren zur Herstellung von Polyurethansystemen, vorzugsweise Polyurethanbeschichtungen, Polyurethanadhäsiven, Polyurethandichtmitteln, Polyurethanelastomeren oder Polyurethanschäumen/-schaumstoffen sowie die Verwendung von erfindungsgemäßen Polyurethansystemen als Kühlschrankisolierung, Dämmplatte, Sandwichelement, Rohrisolation, Sprühschaum, Dosenschaum, insbesondere 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

Die erfindungsgemäßen Formulierungen haben den Vorteil, dass sie sowohl zur Herstellung von flexiblen Schäumen auf Basis von Ether- und Esterpolyolen als auch von Hartschäumen sowie Schäumen, deren Eigenschaften zwischen diesen Klassifizierungen liegen, wie z.B. halbharte Schäume, eingesetzt werden können.

Die erfindungsgemäßen Zusammensetzungen haben außerdem den Vorteil, dass mit ihnen Polyurethansysteme hergestellt werden können, die vollkommen frei von Zinnorganischen Verbindungen, also Verbindungen die eine Sn-C-Bindung aufweisen, insbesondere frei von DBTDL sind.

Mit den erfindungsgemäßen Zusammensetzungen hergestellte Polyurethanschaumblöcke weisen eine relativ gleichmäßige (Schaum-)Dichte über den gesamten Block auf. Durch die relativ gleichmäßige Schaumdichte werden Polyurethanschaumblöcke erhalten, die nur geringe Härteunterschiede innerhalb des Blocks aufweisen.

Durch die Verwendung der erfindungsgemäßen Zusammensetzungen bei der Herstellung von Polyurethanschaumblöcken werden Schaumblöcke erhalten, die nur geringe Deformationen aufweisen. Dadurch können Schaumblöcke konfektioniert werden, ohne viel Abfall zu produzieren.

Unter Cold-Flow wird im Allgemeinen die Ausbeulung, Deformation oder Dimensionsänderung eines Materials unter einem konstanten Gewicht bei Umgebungstemperatur verstanden (Quelle: CRC Press LCC, 1989). Dabei ist das konstante Gewicht in diesem Fall das Eigengewicht des Schaumblockes. Mit dem Auftreten der Deformation des Schaumblockes ist auch eine inhomogene Verteilung der Dichte über den gesamten Block verknüpft und demzufolge auch eine Varianz in der Eindruckhärte. Unter guten Cold-Flow-Eigenschaften werden im Rahmen der vorliegenden Erfindung eine gute Dimensionsstabilität bzgl. Deformation und vorzugsweise auch ein geringeres Setzen des Schaumes verstanden, bevorzugt gepaart mit einer gleichmäßigen Dichteverteilung bei gleicher Eindruckhärte.

Die erfindungsgemäßen Zusammensetzungen, das Verfahren bzw. die Verwendung zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C.

Die erfindungsgemäßen Zusammensetzungen für die Herstellung eines Polyurethansystems, insbesondere eines Polyurethanschaums, zeichnen sich dadurch aus, dass die Zusammensetzungen entsprechend den Erfordernissen des Anspruchs 1 ein oder mehrere Verbindungen aufweist, die mindestens einen 5- oder 6-gliedrigen Ring aufweist, der ein oder zwei Sauerstoffatom(e) und Kohlenstoffatome enthält.

An den Ringkohlenstoffatomen können direkt und/oder über Kohlenwasserstoffketten OH-Gruppen angebunden sein, Verbindungen solcher Art sind z. B. ringförmige Strukturen vom Pyran-Typ (Pyranosen) und Furan-Typ (Furanosen), oder an die Ringkohlenstoffatome sind weder direkt noch indirekt OH-Gruppen angebunden, wie z. B. Glycolcarbonat.

Die erfindungsgemäße Zusammensetzung weist entsprechend den Erfordernissen des Anspruchs 1 mindestens eine, einen 5- oder 6-gliedrigen Ring aufweisende Verbindung auf, die ausgewählt ist aus der Gruppe umfassend 5- oder 6-gliedrige Polyole, die mindestens 4 OH-Gruppen aufweisen oder deren Mono-, Di- oder Tri-Estern mit einer Carbonsäure, oder Glycerolcarbonat. Als 5- oder 6-gliedrige Polyole, die mindestens 4 OH-Gruppen aufweisen oder deren Mono-, Di- oder Tri-Ester werden Maltit, Sorbitan, Sorbitanmonooleat, Sorbitantrioleat oder Sorbitandihydrid (1,2,3,6-Dianhydro-D-Sorbit, Isosorbid) enthält.

Die Zusammensetzung kann außerdem ein oder mehrere Lösemittel aufweisen. Vorzugsweise weist die Zusammensetzung Wasser als Lösemittel auf.

Die erfindungsgemäße Zusammensetzung kann des weiteren Zinn- und/oder Zinkricinoleat(n), Zinncarboxylat(e), Polyalkylenglycol, wie z. B. Polypropylenglycol oder Polyethylenglycol, bevorzugt Polyethylenglycol, und/oder ggf. ein oder mehrere organische Lösemittel aufweisen. Als Zinn- bzw. Zinksalze werden bevorzugt die Zinn (II)- bzw. Zink (II)-Salze eingesetzt.

Die erfindungsgemäße Zusammensetzung weist neben der/den einen 5- oder 6-gliedrigen Ring aufweisenden Verbindung/en ein Polyalkylenglycol, bevorzugt Polypropylenglycol oder Polyethylenglycol, besonders bevorzugt Polyethylenglycol auf. Das Massenverhältnis der einen 5- oder 6-gliedrigen Ring aufweisenden Verbindung zu den Polyalkylenglycolen beträgt in der erfindungsgemäßen Zusammensetzung 1 zu 3 bis 3 zu 1, bevorzugt 1 zu 2 bis 2 zu 1 und besonders bevorzugt 1 zu 1,2 bis 1,2 zu 1. Es kann vorteilhaft sein, wenn die erfindungsgemäßen Zusammensetzungen neben Verbindungen, die einen 5- oder 6-gliedrigen Ring aufweisen und Polyalkylenglycol auch Wasser aufweisen. Der Gehalt an Wasser beträgt vorzugsweise von 0,1 bis 50 Gew.-%, bevorzugt 1 bis 25 Gew.-% bezogen auf die Summe aus Verbindungen, die einen 5- oder 6-gliedrigen Ring aufweisen, Polyalkylenglycol(en) und Wasser.

Das bzw. die weiteren Zinncarboxylate sind vorzugsweise ausgewählt aus der Gruppe umfassend Monocarbonsäuren mit 1 bis 30, vorzugsweise 4 bis 18 und besonders bevorzugt 8 bis 12 Kohlenstoffatomen, insbesondere Zinnsalze der n-Octansäure, n-Nonansäure, 3,5,5-Trimethylhexansäure, n-Decansäure oder 2-Ethylhexansäure. Bevorzugte Zinncarboxylate sind solche von Carbonsäuren, die nicht ausschließlich eine einzelne Ethyl- oder n-Propylverzweigung in 2-Position aufweisen. Besonders bevorzugte Zinncarboxylate sind die Zinnsalze der 3,5,5-Trimethylhexansäure oder n-Octansäure.

Als Polyethylenglykole können alle bekannten Polyethylenglykole eingesetzt werden. Vorzugsweise werden solche Polyethylenglykole eingesetzt, die bei 23 °C und Normaldruck als wachsartiger Feststoff vorliegen. Bevorzugt weist die erfindungsgemäße Zusammensetzung als Polyethylenglykol ein oder mehrere Polyethylenglykole, vorzugsweise mit einem mittleren Molekulargewicht Mw von 100 bis 1500 g/mol, bevorzugt von 150 bis 1000 g/mol und besonders bevorzugt von 200 bis 500 g/mol auf.

Es kann vorteilhaft sein, wenn die erfindungsgemäße Zusammensetzung ein sekundäres Amin, insbesondere Diethanolamin aufweist.

Soll die erfindungsgemäße Zusammensetzung zur Herstellung von Polyurethansystemen verwendet werden, kann es vorteilhaft sein, wenn die Zusammensetzung ein oder mehrere organische Isocyanate mit zwei oder mehr Isocyanat-Funktionen, ein oder mehrere Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additive aufweist.

Insbesondere kann es zur Herstellung von Polyurethansystemen vorteilhaft sein, wenn die Zusammensetzung als weitere Additive ein oder mehrere, vorzugsweise tertiäre Amine, ein oder mehrere Silikonstabilisatoren und/oder ein oder mehrere Emulgatoren aufweist.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Besonders bevorzugte Isocyanate sind Mischungen von TDI und MDI.

Geeignete Polyole im Sinne dieser Erfindung sind vorzugsweise alle organischen Substanzen mit mehreren gegenüber Isocyanaten reaktiven Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole. Die Polyole sind vorzugsweise keine Verbindungen, die mindestens einen 5- oder 6-gliedrigen Ring aufweisen, der aus ein oder zwei Sauerstoffatomen und Kohlenstoffatomen aufgebaut ist.

Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs)eingesetzt werden. Diese Polyole werden aus natürlichen Ölen wie z.B. Soja- oder Palmöl gewonnen und können unmodifiziert oder modifiziert verwendet werden.

Ein geeignetes Verhältnis von Isocyanat und Polyol, ausgedrückt als Index der Zusammensetzung, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Die Menge der ggf. als Katalysatoren in der erfindungsgemäßen Zusammensetzung vorhandenen Zinn- und Zinksalze beträgt vorzugsweise von 0,01 bis 5 pphp (= Gewichtsteile Zinn- und Zinkricinoleate und Zinncarboxylate bezogen auf 100 Gewichtsteile Polyol), vorzugsweise von 0,05 bis 1 pphp.

Geeignete weitere Katalysatoren, die in der erfindungsgemäßen Zusammensetzung zusätzlich vorhanden sein können, sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat. Vorzugsweise werden als weitere Katalysatoren solche eingesetzt, die keine organische Zinnverbindungen, insbesondere kein Dibutylzinndilaurat enthalten.

Geeignete Einsatzmengen dieser zusätzlichen Katalysatoren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte in der erfindungsgemäßen Zusammensetzungen hängen davon ab, ob zusätzlich zum Wasser noch physikalische Treibmittel eingesetzt werden oder nicht. Bei rein Wasser-getriebenen Schäumen liegen die Werte typischerweise bei 1 bis 20 pphp, werden zusätzlich andere Treibmittel eingesetzt, verringert sich die Einsatzmenge auf üblicherweise 0 oder 0,1 bis 5 pphp. Zur Erlangung hoher Schaumraumgewichte werden weder Wasser noch andere Treibmittel eingesetzt.

Geeignete physikalische Treibmittel im Sinne dieser Erfindung sind Gase, beispielsweise verflüssigtes CO₂, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoff-haltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben oder an Stelle von Wasser und ggf. physikalischen Treibmitteln, können auch andere chemische Treibmittel, die mit Isocyanaten unter Gasentwicklung reagieren, wie beispielsweise Ameisensäure oder Carbonate in der erfindungsgemäßen Zusammensetzung vorhanden sein.

Geeignete Flammschutzmittel im Sinne dieser Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die erfindungsgemäße Zusammensetzung bzw. die oben genannten Verbindungen, die mindestens einen 5- oder 6-gliedrigen Ring aufweist, der ein oder zwei Sauerstoffatom(e) und Kohlenstoffatome enthält, kann/können z. B. zur Herstellung eines Polyurethansystems, bevorzugt eines Polyurethanschaums verwendet werden. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen. Die erfindungsgemäßen Zusammensetzungen können prinzipiell in allen Verfahren zur Herstellung von Polyurethansystemen eingesetzt werden. Erfindungsgemäße Verfahren zur Herstellung eines Polyurethansystems, zeichnen sich demgemäß dadurch aus, dass eine erfindungsgemäße Zusammensetzung verwendet bzw. eingesetzt wird. Mittels des erfindungsgemäßen Verfahrens werden als Polyurethansysteme vorzugsweise Polyurethanbeschichtungen, Polyurethanadhäsive, Polyurethandichtmittel, Polyurethanelastomere oder Polyurethanschäumen/-schaumstoffe hergestellt.

Erfindungsgemäße Polyurethansysteme nach Maßgabe der Ansprüche 1 bis 4 zeichnen sich demgemäß dadurch aus, dass sie unter Verwendung einer erfindungsgemäßen Zusammensetzung hergestellt wurden. Bevorzugte erfindungsgemäße Polyurethansysteme sind insbesondere Polyurethanbeschichtungen, Polyurethanadhäsive, Polyurethandichtmittel, Polyurethanelastomere oder Polyurethanschäume/-schaumstoffe. Vorzugsweise ist das das Polyurethansystem ein Polyurethanhartschaum, ein Polyurethanweichschaum, ein viskoelastischer Schaum, ein Polyurethan HR-Schaum, ein halbharter Polyurethanschaum, ein thermoverformbarer Polyurethanschaum oder ein Integralschaum, bevorzugt ein Polyurethan HR-Schaum ist.

Die erfindungsgemäßen Polyurethansysteme weisen von 0,01 bis 5 Gew.-% an Bausteinen auf, die auf Verbindungen basieren, die mindestens einen 5- oder 6-gliedrigen Ring aufweisen, der aus ein oder zwei Sauerstoffatomen und Kohlenstoffatomen aufgebaut ist, nach Maßgabe des Anspruchs 1.

Die Verarbeitung der Zusammensetzungen zu Polyurethansystemen, insbesondere Polyurethanschaumstoffen bzw. Die Herstellung der Polyurethansysteme/Polyurethanschaumstoffe kann nach allen dem Fachmann geläufigen Verfahren erfolgen, beispielsweise im Handmischverfahren oder bevorzugt mit Hilfe von Hochdruck- oder Niederdruck-Verschäumungsmaschinen. Das erfindungsgemäße Verfahren kann kontinuierlich oder diskontinuierlich durchgeführt werden. Eine diskontinuierliche Durchführung des Verfahrens ist bevorzugt bei der Herstellung von Formschäumen, Kühlschränken oder Paneelen. Eine kontinuierliche Verfahrensführung ist bei der Herstellung von Dämmplatten, Metallverbundelementen, Blöcken oder bei Sprühverfahren bevorzugt.

In dem erfindungsgemäßen Verfahren werden die Bestandteile der erfindungsgemäßen Zusammensetzung vorzugsweise direkt vor oder aber auch erst während der Reaktion (zur Ausbildung der Urethanbindungen) zusammengemischt. Bevorzugt erfolgt die Zusammenführung/Zudosierung der Bestandteile der Zusammensetzung in einem Mischkopf.

In dem erfindungsgemäßen Verfahren (erfindungsgemäße Verwendung) ist die direkte Zudosierung eines Katalysatorsystems, welches ausschließlich Zinn- und/oder Zinkricinoleat(e) und ggf. Zinncarboxylat(e) aufweist, bevorzugt. Bei der direkten Zudosierung des Katalysatorsystems sollte die Mischung aus Zinn- und/oder Zinkricinoleat(en) und ggf. Zinncarboxylat(en) vorzugsweise flüssig vorliegen, um ohne die Verwendung von Lösungsmittel eine einfache Zugabe zu gewährleisten.

Sowohl Viskosität als auch Metallgehalt des Katalysatorsystems kann durch Änderung der Kettenlänge der Säure variiert werden, sodass eine für das jeweilige System optimale Reaktivität und Viskosität eingestellt werden kann. Die direkte Dosierung des viskosen Zink-/Zinnricinoleats (Salze der Ricinolsäure) in die Polyurethansystemkomponenten, insbesondere Verschäumungskomponenten, hingegen kann aufgrund sehr hoher Viskosität zu Problemen führen. Da viele Verschäumer nur über eine direkte Dosierung verfügen, ist ein Produkt, welches den gegebenen Bedingungen individuell angepasst werden kann, deshalb von großem Vorteil.

Alternativ zur direkten Verschäumung kann das Katalysatorsystem auch in verdünnter Form zudosiert werden. Dabei sind wasserfreie Lösungen vorzuziehen, da einige Zinn-/Zinksalze nur bedingt hydrolysestabil sind.

Die erfindungsgemäßen Polyurethansysteme, insbesondere die Polyurethanschäume, können als Kühlschrankisolierung, Dämmplatte, Sandwichelement, Rohrisolation, Sprühschaum, Dosenschaum, insbesondere 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

Es wurden Schaumstoffblöcke auf einer Niederdruckverschäummaschine der Firma Laader Berg, Typ Maxfoam F8 hergestellt. Eine ausführliche Beschreibung der Herstellung von Schaumblöcken kann DE-OS 2142450 entnommen werden.

Die Verschäummaschine wurde mit den folgenden Parametern betrieben:
Polyolausstoss: 220kg/min,
75 Liter Trogvolumen,
Mischkammerdruck 4,5 bar,
Rührergeschwindigkeit: 4500 U/min,
Luftbeladung: 3,0 l/min

Als Rohstoffe zur Herstellung der Schaumblöcke wurden die in Tabelle 1 genannten Rohstoffe verwendet.

**Tabelle 1: Rohstoffe zur Herstellung der Schaumblöcke**

| | |
|---|---|
| Polyol 1 | Polyetherol trifunktionell, MW 4800, 25 Gew.-% Styrolacrylnitrilgefüllt, PCC Rokita |
| Polyol 2 | Polyetherol trifunktionell, MW 6000, BASF |
| Katalysator 1 | Tertiäres Amin, 1,1'-{[3-(dimethylamino)propyl]imino}bispropan-2-ol, Evonik Industries AG |
| Katalysator 2 | Tegoamin DEOA 85 (Diethanolamin 85 Gew.-% in Wasser), Evonik Industries AG |
| Katalysator 3 | Zinkricinoleat, Evonik Industries AG |
| Katalysator 4 | Zinnricinoleat, Evonik Industries AG |
| Silikonstabilisator | Tegostab B 8783 LF 2, Evonik Industries AG |
| Gemisch 1 | Polyethylenglykol* (20 Gew.-%), Wasser (25 Gew.-%), d-Glucitol (45 Gew.-%), Urea (10 Gew.-%) |
| Gemisch 2 | Polyethylenglykol* (50 Gew.-%), Maltitsirup 75/75 (50 Gew.-%) |
| Isocyanat | Toluylendiisocyanat, TDI 80, (80 Gew.-% 2,4-Isomere, 20 Gew.-% 2,6-Isomer, Bayer MaterialScience AG |

| | |
|---|---|
| * PEG 200 | |

Zur Herstellung der Schaumblöcke wurden die in Tabelle 2 aufgeführten Formulierungen verwendet. Dabei wurden die Rohstoffe über separate Leitungen zum Mischkopf gepumpt und im jeweiligen Mischungsverhältnis im Mischkopf miteinander verrührt/vermischt. Das Beispiel V1 stellt den Vergleichsversuch dar, das Beispiel EM1 stellt ein erfindungsgemäßes Beispiel dar.

**Tabelle 2: Formulierung zur Herstellung der Schaumblöcke (Angaben in Masseneilen pro 100 Massenteile Polyol, wobei CaCO₃ bei der Berechnung der Anteile zu den Polyolen gezählt wird)**

| Beispiel | V1 | EM1 |
|---|---|---|
| Polyol 1 | 85 | 85 |
| Polyol 2 | 9 | 9 |
| CaCO₃ | 6 | 6 |
| Isocyanat Index | 101 | 101 |
| Isocyanat | 33,1 | 33,1 |
| Wasser sep. | 1,9 | 2,1 |
| Katalysator 1 | 0,1 | 0,1 |
| Katalysator 2 | 0,6 | 0,6 |
| Gemisch 1 | 1,5 | --- |
| Gemisch 2 | --- | 1,5 |
| Silikonstabilisator | 0,3 | 0,3 |
| Katalysator 3 | 0,2 | 0,2 |
| Katalysator 4 | 0,35 | 0,35 |

Es wurden Schaumblöcke mit einer ungefähren Größe von ca. 1,13 m x 2,05 m X 2,05 m (H x B x T) erhalten.

Bei den so hergestellten Schaumblöcken wurden an verschiedenen Stellen der Blöcke die Dichte und die Härteverteilung (Stauchhärte, Druckspannung) bestimmt. Dazu wurde die Oberfläche des Schaumblocks in 9 Quadranten aufgeteilt. Jedes Schaumstoffprüfteil aus den einzelnen Quadranten wurde einem Druckversuch nach DIN 53577 unterzogen. Die ermittelte Druckspannung bei 40% Stauchung entspricht der Stauchhärte in kPa. Gemessen wurden die Prüfkörper mit einer Universalprüfmaschine H10KS der Firma Tinius Olsen in der folgenden Art und Weise:
Von dem erhaltenen Schaum wurde zunächst eine 10 cm dicke Scheibe geschnitten. Von dieser wiederum wurden 10 cm der Bodenzone und von den beiden Seiten jeweils 10 cm entfernt. Danach wurde der verbleibende Schaumkern in Schichten zu je 5 cm geschnitten. Aus diesen Scheiben wurden anschließend die Prüfkörper von 10 x 10 cm hergestellt.

Für die Stauchhärtemessung wurde ein Messstempel von 10 x 10 cm verwendet. Dabei komprimiert der Stempel den Prüfkörper dreimal, bevor bei der vierten Stauchung die eigentliche Messung erfolgt. Es wurden Be- und Entlastungskurven des Schaumes aufgenommen. Für Beispielmesskurven siehe: Becker, Braun, Kunststoff-Handbuch, Carl Hanser Verlag München, Band 7: Polyurethane, S. 494, 1983. Die ermittelte Druckspannung bei 40% Stauchung entspricht der Stauchhärte in kPa.

Die Ergebnisse dieser Bestimmungen sind in Tabelle 3 wiedergegeben.

**Tabelle 3: Ergebnisse der Prüfung der Dichte der Stauchhärte**

| **Dichte in kg/m³ Messestelle im Schaumblock** | **V1** | **EM1** |
|---|---|---|
| oben | 39 | 37,3 |
| Mitte | 40,2 | 37,7 |
| unten | 41,6 | 39,2 |
| Mittelwert | 40,3 | 38,1 |
| Schwankung % | 2,6 | 1,9 |

| **Stauchhärte (Druckspannung) bei 40% Kompression / Deformation in kPa Messestelle im Schaumblock** | | |
|---|---|---|
| oben | 3 | 3 |
| Mitte | 3,1 | 3,1 |
| unten | 3,1 | 3,1 |
| Mittelwert | 3,1 | 3,1 |

Bezüglich der Dichteverteilung zeigt das Vergleichsbeispiel V1, dass die Verwendung des Gemisches 1 zu einer höheren Dichteschwankung führt. Die Verwendung des Gemisches 2 in Beispiel EM1, zeigt eine deutlich homogenere Verteilung der Dichte über den gesamten Schaumstoffblock, was das angestrebte Ziel ist. Die anderen mechanischen Eigenschaften wie Druckspannung bei 40% Kompression DIN EN ISO 3386, die Zugfestigkeit, Bruchdehnung DIN EN ISO 1798 und der Druckverformungsrest (DIN EN ISO 1856) werden nicht negativ beeinflusst, was auf Grund der etwas anderen Zusammensetzung des Gemisches 2 hätte möglich sein können.

## Patentansprüche

1. Polyurethansystem, hergestellt unter Verwendung einer Zusammensetzung, welche ein oder mehrere Verbindungen aufweist, die mindestens einen 5- oder 6-gliedrigen Ring aufweist, der ein oder zwei Sauerstoffatom(e) und Kohlenstoffatome enthält, enthaltend Maltit, Sorbitan, Sorbitanmonooleat, Sorbitantrioleat oder Isosorbid,
wobei die Zusammensetzung neben der/den einen 5- oder 6-gliedrigen Ring aufweisenden Verbindung/en ein Polyalkylenglycol aufweist, wobei das Massenverhältnis der einen 5- oder 6-gliedrigen Ring aufweisenden Verbindung zu den Polyalkylenglycolen in der Zusammensetzung 1 zu 3 bis 3 zu 1 beträgt,
und wobei das Polyurethansystem von 0,01 bis 5 Gew.-% an Bausteinen aufweist, die auf Verbindungen basieren, die mindestens einen 5- oder 6-gliedrigen Ring aufweist, der aus ein oder zwei Sauerstoffatomen und Kohlenstoffatomen aufgebaut ist.

2. Polyurethansystem gemäß Anspruch 1, **dadurch gekennzeichnet, dass** die zur Herstellung eingesetzte Zusammensetzung Zinn- und/oder Zinkricinoleat(n), Zinncarboxylat(e), oder Polyethylenglycol, und ggf. ein Lösemittel aufweist.

3. Polyurethansystem gemäß Anspruch 1 oder 2, **dadurch gekennzeichnet, dass** die zur Herstellung eingesetzte Zusammensetzung ein sekundäres Amin, insbesondere Diethanolamin oder auch Triethanolamin aufweist.

4. Polyurethansystem gemäß einem der Ansprüche 1 bis 3, **dadurch gekennzeichnet, dass** die zur Herstellung eingesetzte Zusammensetzung ein oder mehrere organische Isocyanate mit zwei oder mehr Isocyanat-Funktionen, ein oder mehrere Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additive aufweist.

5. Verwendung einer Zusammensetzung
welche ein oder mehrere Verbindungen aufweist, die mindestens einen 5- oder 6-gliedrigen Ring aufweist, der ein oder zwei Sauerstoffatom(e) und Kohlenstoffatome enthält, enthaltend Maltit, Sorbitan, Sorbitanmonooleat, Sorbitantrioleat oder Isosorbid,
wobei die Zusammensetzung neben der/den einen 5- oder 6-gliedrigen Ring aufweisenden Verbindung/en ein Polyalkylenglycol aufweist, wobei das Massenverhältnis der einen 5- oder 6-gliedrigen Ring aufweisenden Verbindung zu den Polyalkylenglycolen in der Zusammensetzung 1 zu 3 bis 3 zu 1 beträgt,
zur Herstellung eines Polyurethansystems, bevorzugt eines Polyurethanschaums,
wobei das Polyurethansystem von 0,01 bis 5 Gew.-% an Bausteinen aufweist, die auf Verbindungen basieren, die mindestens einen 5- oder 6-gliedrigen Ring aufweist, der aus ein oder zwei Sauerstoffatomen und Kohlenstoffatomen aufgebaut ist.

6. Verwendung gemäß Anspruch 5, **dadurch gekennzeichnet, dass** die Zusammensetzung als weitere Additive ein oder mehrere, vorzugsweise tertiäre Amine, ein oder mehrere Silikonstabilisatoren und/oder ein oder mehrere Emulgatoren aufweist.

7. Verfahren zur Herstellung eines Polyurethansystems, **dadurch gekennzeichnet, dass** eine Zusammensetzung, welche ein oder mehrere Verbindungen aufweist, die mindestens einen 5- oder 6-gliedrigen Ring aufweist, der ein oder zwei Sauerstoffatom(e) und Kohlenstoffatome enthält, enthaltend Maltit, Sorbitan, Sorbitanmonooleat, Sorbitantrioleat oder Isosorbid,
eingesetzt wird,
wobei die Zusammensetzung neben der/den einen 5- oder 6-gliedrigen Ring aufweisenden Verbindung/en ein Polyalkylenglycol aufweist, wobei das Massenverhältnis der einen 5- oder 6-gliedrigen Ring aufweisenden Verbindung zu den Polyalkylenglycolen in der Zusammensetzung 1 zu 3 bis 3 zu 1 beträgt, wobei das Polyurethansystem von 0,01 bis 5 Gew.-% an Bausteinen aufweist, die auf Verbindungen basieren, die mindestens einen 5- oder 6-gliedrigen Ring aufweist, der aus ein oder zwei Sauerstoffatomen und Kohlenstoffatomen aufgebaut ist.

8. Verfahren nach Anspruch 7, **dadurch gekennzeichnet, dass** als Polyurethansystem Polyurethanbeschichtungen, Polyurethanadhäsive, Polyurethandichtmittel, Polyurethanelastomere oder Polyurethanschäumen/-schaumstoffe hergestellt werden.

9. Polyurethansystem nach einem der Ansprüche 1 bis 4 **dadurch gekennzeichnet, dass** es eine Polyurethanbeschichtung, ein Polyurethanadhäsiv, ein Polyurethandichtmittel, ein Polyurethanelastomer oder ein Polyurethanschaum/-schaumstoff ist.

10. Polyurethansystem nach einem der Ansprüche 1 bis 4 oder 9, **dadurch gekennzeichnet, dass** das Polyurethansystem ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum, bevorzugt ein Polyurethan HR-Schaum ist.

11. Verwendung von Polyurethansystemen gemäß einem der Ansprüche 9 bis 10 als Kühlschrankisolierung, Dämmplatte, Sandwichelement, Rohrisolation, Sprühschaum, Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

## Claims

1. Polyurethane system obtained using a composition which comprises one or more compounds comprising at least one 5- or 6-membered ring comprising one or two oxygen atom(s) and carbon atoms, comprising maltitol, sorbitan, sorbitan monooleate, sorbitan trioleate or isosorbide,
wherein the composition comprises a polyalkylene glycol in addition to the compound(s) comprising a 5- or 6-membered ring, wherein the mass ratio of the compound comprising a 5- or 6-membered ring to the polyalkylene glycols in the composition is in the range from 1:3 to 3:1,
and wherein the polyurethane system comprises from 0.01 to 5 wt% of structural units based on compounds comprising at least one 5- or 6-membered ring constructed of one or two oxygen atoms and carbon atoms.

2. Polyurethane system according to Claim 1, **characterized in that** the composition used in the production comprises tin and/or zinc ricinoleate(s), tin carboxylate(s), or polyethylene glycol, and optionally a solvent.

3. Polyurethane system according to Claim 1 or 2, **characterized in that** the composition used in the production comprises a secondary amine, especially diethanolamine or else triethanolamine.

4. Polyurethane system according to any of Claims 1 to 3, **characterized in that** the composition used in the production comprises one or more organic isocyanates having two or more isocyanate functions, one or more polyols having two or more isocyanate-reactive groups, optionally further catalysts for the isocyanate-polyol and/or isocyanate-water reactions and/or the trimerization of isocyanate, water, optionally physical blowing agents, optionally flame retardants and optionally further additives.

5. Use of a composition which comprises one or more compounds comprising at least one 5- or 6-membered ring comprising one or two oxygen atom(s) and carbon atoms, comprising maltitol, sorbitan, sorbitan monooleate, sorbitan trioleate or isosorbide,
wherein the composition comprises a polyalkylene glycol in addition to the compound(s) comprising a 5- or 6-membered ring, wherein the mass ratio of the compound comprising a 5- or 6-membered ring to the polyalkylene glycols in the composition is in the range from 1:3 to 3:1,
in the manufacture of a polyurethane system, preferably a polyurethane foam,
wherein the polyurethane system comprises from 0.01 to 5 wt% of structural units based on compounds comprising at least one 5- or 6-membered ring constructed of one or two oxygen atoms and carbon atoms.

6. Use according to Claim 5, **characterized in that** the composition comprises one or more, preferably tertiary, amines, one or more silicone stabilisers and one or more emulsifiers by way of further additives.

7. Process for producing a polyurethane system, **characterized in that** a composition which comprises one or more compounds comprising at least one 5- or 6-membered ring comprising one or two oxygen atom(s) and carbon atoms,
comprising maltitol, sorbitan, sorbitan monooleate, sorbitan trioleate or isosorbide, is used,
wherein the composition comprises a polyalkylene glycol in addition to the compound(s) comprising a 5- or 6-membered ring, wherein the mass ratio of the compound comprising a 5- or 6-membered ring to the polyalkylene glycols in the composition is in the range from 1:3 to 3:1,
wherein the polyurethane system comprises from 0.01 to 5 wt% of structural units based on compounds comprising at least one 5- or 6-membered ring constructed of one or two oxygen atoms and carbon atoms.

8. Process according to Claim 7, **characterized in that** polyurethane coatings, polyurethane adhesives, polyurethane sealants, polyurethane elastomers or polyurethane foams are produced by way of polyurethane systems.

9. Polyurethane system according to any of Claims 1 to 4, **characterized in that** it is a polyurethane coating, a polyurethane adhesive, a polyurethane sealant, a polyurethane elastomer or a polyurethane foam.

10. Polyurethane system according to any of Claims 1 to 4 or 9, **characterized in that** the polyurethane system is a rigid polyurethane foam, a flexible polyurethane foam, a viscoelastic foam, an HR -foam, a semi-rigid polyurethane foam, a thermoformable polyurethane foam or an integral foam, preferably an HR polyurethane foam.

11. Use of polyurethane systems according to any of Claims 9 to 10 as refrigerator insulation, insulation panel, sandwich element, pipe insulation, spray foam, can foam, wood imitation, modelling foam, packaging foam, mattress, furniture cushioning, automotive seat cushioning, headrest, dashboard, automotive interior trim, automotive roof liner, sound absorption material, steering wheel, shoe sole, carpet backing foam, filter foam, sealing foam, sealant and adhesive or for producing corresponding products.

## Revendications

1. Système de polyuréthane, fabriqué en utilisant une composition, qui comprend un ou plusieurs composés qui comprennent au moins un cycle à 5 ou 6 chaînons, qui contient un ou deux atomes d'oxygène et des atomes de carbone, contenant du maltitol, du sorbitane, du monooléate de sorbitane, du trioléate de sorbitane ou de l'isosorbide,
la composition comprenant un polyalkylène glycol en plus du ou des composés comprenant un cycle à 5 ou 6 chaînons, le rapport en masse entre le composé comprenant un cycle à 5 ou 6 chaînons et les polyalkylène glycols dans la composition étant de 1 sur 3 à 3 sur 1,
et le système de polyuréthane comprenant de 0,01 à 5 % en poids de constituants qui sont à base de composés qui comprennent au moins un cycle à 5 ou 6 chaînons, qui est formé par un ou deux atomes d'oxygène et des atomes de carbone.

2. Système de polyuréthane selon la revendication 1, **caractérisé en ce que** la composition utilisée pour la fabrication comprend un ou plusieurs ricinoléates d'étain et/ou de zinc, un ou plusieurs carboxylates d'étain ou du polyéthylène glycol, et éventuellement un solvant.

3. Système de polyuréthane selon la revendication 1 ou 2, **caractérisé en ce que** la composition utilisée pour la fabrication comprend une amine secondaire, notamment la diéthanolamine ou également la triéthanolamine.

4. Système de polyuréthane selon l'une quelconque des revendications 1 à 3, **caractérisé en ce que** la composition utilisée pour la fabrication comprend un ou plusieurs isocyanates organiques contenant deux fonctions isocyanate ou plus, un ou plusieurs polyols contenant deux groupes réactifs avec les isocyanates ou plus, éventuellement des catalyseurs supplémentaires pour les réactions isocyanate-polyol et/ou isocyanate-eau et/ou la trimérisation d'isocyanates, de l'eau, éventuellement des agents gonflants physiques, éventuellement des agents ignifuges et éventuellement d'autres additifs.

5. Utilisation d'une composition qui comprend un ou plusieurs composés qui comprennent au moins un cycle à 5 ou 6 chaînons, qui contient un ou deux atomes d'oxygène et des atomes de carbone, contenant du maltitol, du sorbitane, du monooléate de sorbitane, du trioléate de sorbitane ou de l'isosorbide,
la composition comprenant un polyalkylène glycol en plus du ou des composés comprenant un cycle à 5 ou 6 chaînons, le rapport en masse entre le composé comprenant un cycle à 5 ou 6 chaînons et les polyalkylène glycols dans la composition étant de 1 sur 3 à 3 sur 1,
pour la fabrication d'un système de polyuréthane, de préférence d'une mousse de polyuréthane,
le système de polyuréthane comprenant de 0,01 à 5 % en poids de constituants qui sont à base de composés qui comprennent au moins un cycle à 5 ou 6 chaînons, qui est formé par un ou deux atomes d'oxygène et des atomes de carbone.

6. Utilisation selon la revendication 5, **caractérisée en ce que** la composition comprend en tant qu'additifs supplémentaires une ou plusieurs amines de préférence tertiaires, un ou plusieurs stabilisateurs à base de silicone et/ou un ou plusieurs émulsifiants.

7. Procédé de fabrication d'un système de polyuréthane, **caractérisé en ce qu'**une composition qui comprend un ou plusieurs composés qui comprennent au moins un cycle à 5 ou 6 chaînons, qui contient un ou deux atomes d'oxygène et des atomes de carbone, contenant du maltitol, du sorbitane, du monooléate de sorbitane, du trioléate de sorbitane ou de l'isosorbide, est utilisée,
la composition comprenant un polyalkylène glycol en plus du ou des composés comprenant un cycle à 5 ou 6 chaînons, le rapport en masse entre le composé comprenant un cycle à 5 ou 6 chaînons et les polyalkylène glycols dans la composition étant de 1 sur 3 à 3 sur 1,
et le système de polyuréthane comprenant de 0,01 à 5 % en poids de constituants qui sont à base de composés qui comprennent au moins un cycle à 5 ou 6 chaînons, qui est formé par un ou deux atomes d'oxygène et des atomes de carbone.

8. Procédé selon la revendication 7, **caractérisé en ce que** des revêtements à base de polyuréthane, des adhésifs à base de polyuréthane, des agents d'étanchéité à base de polyuréthane, des élastomères de polyuréthane ou des mousses/matières moussées à base de polyuréthane sont fabriqués en tant que système de polyuréthane.

9. Système de polyuréthane selon l'une quelconque des revendications 1 à 4, **caractérisé en ce qu'**il consiste en un revêtement à base de polyuréthane, un adhésif à base de polyuréthane, un agent d'étanchéité à base de polyuréthane, un élastomère de polyuréthane ou une mousse/matière moussée à base de polyuréthane.

10. Système de polyuréthane selon l'une quelconque des revendications 1 à 4 ou 9, **caractérisé en ce que** le système de polyuréthane est une mousse dure de polyuréthane, une mousse souple de polyuréthane, une mousse viscoélastique, une mousse HR, une mousse de polyuréthane semi-dure, une mousse de polyuréthane thermoformable ou une mousse intégrale, de préférence une mousse HR de polyuréthane.

11. Utilisation de systèmes de polyuréthane selon l'une quelconque des revendications 9 à 10 en tant qu'isolation de réfrigérateur, plaque d'isolation, élément en sandwich, isolation de tube, mousse à pulvériser, mousse en boîte, imitation de bois, mousse de modèle, mousse d'emballage, matelas, rembourrage de meuble, rembourrage de siège automobile, appuie-tête, tableau de bord, habillage intérieur d'automobile, toit d'automobile, matériau d'absorption acoustique, volant, semelle de chaussure, mousse pour le côté arrière de tapis, mousse de filtration, mousse d'étanchéité, agent d'étanchéité et colle ou pour la fabrication de produits correspondants.
